# EUROPEAN PATENT APPLICATION

(11) **EP 2 843 608 A1**
(43) Date of publication of application: **04.03.2015**
(21) Application number: 12875221.9
(22) Date of filing: 12.11.2012
(51) Int. Cl.: G06Q 30/06, G06Q 20/12, G06Q 30/02, G06Q 30/04

(54) **E-BOOK PROVISION SERVER, INFORMATION PROCESSING TERMINAL, E-BOOK PROVISION SYSTEM, E-BOOK TRANSMISSION METHOD, PROGRAM, AND RECORDING MEDIUM**

(30) Priority: 27.04.2012 JP 2012104188
(71) Applicant: Rakuten, Inc., Tokyo 140-0002 (JP)
(72) Inventor: SUZUKI, Hisashi, Tokyo 140-0002 (JP)
(74) Representative: EIP
(86) International application number: PCT/JP2012/079244
(87) International publication number: WO 2013/161108

(57) **Abstract**

Provided is an electronic book providing server configured to enable, when a user desires to view an electronic book, the user to view the electronic book earlier than in the related art. A purchase probability prediction unit (42) predicts an electronic book to be purchased with high probability, and predicts a user terminal (14) to be used to view the electronic book when the electronic book is purchased. An electronic book transmission unit (44) transmits a file of the electronic book which is predicted to be purchased with high probability and for which a transmission request has not been received, to the user terminal (14), in a state in which viewing of at least a part of contents of the electronic book is restricted before the electronic book is purchased and in which the at least a part is allowed to be viewed after the electronic book is purchased.

## Description

### Technical Field

The present invention relates to an electronic book providing server, an information processing terminal, an electronic book providing system, an electronic book transmission method, a program, and a recording medium.

### Background Art

There exist various technologies relating to viewing control of an electronic book. Patent Literature 1 discloses an electronic book distribution system for providing a user with an electronic book that stores a payment status indicating unsettled payment when there is a request for distribution of the electronic book selected by the user. Further, Patent Literature 1 discloses that, for example, the electronic book that stores the payment status indicating unsettled payment is put into a state in which onlypartial information is displayed, and when payment processing for the electronic book is completed in response to a purchase request, the payment status stored in the electronic book is overwritten by a payment status indicating settled payment, to thereby allow all the information on the electronic book to be viewed.

### Citation List

### Patent Literature

Patent Literature 1: JP 2003-271830 A

### Summary of Invention

### Technical Problem

In the technology disclosed in Patent Literature 1, an electronic book is downloaded in response to a user's request. It takes approximately several seconds to several minutes to download the electronic book. In particular, it takes longer to download a large-size electronic book such as an electronic book (for example, comic book) having a large number of images. Therefore, in the technology disclosed in Patent Literature 1, it takes much time for the user to get ready to read an electronic book after requesting the electronic book.

The present invention has been made in view of the above-mentioned problem, and an object thereof is to enable, when a user desires to view an electronic book, the user to view the electronic book earlier than in the related art.

### Solution to Problem

In order to solve the above-mentioned problems, an electronic book providing server according to one embodiment of the present invention includes: prediction means for predicting an electronic book to be purchased with high probability, and predicting an information processing terminal to be used to view the electronic book when the electronic book is purchased; and transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

Further, an information processing terminal according to one embodiment of the present invention includes: reception means for receiving a file of an electronic book from an electronic book providing server for transmitting the file of the electronic book which is predicted to be purchased with high probability and for which a transmission request has not been received in a state in which viewing of at least a part of contents of the electronic book is restricted before the electronic book is purchased and in which the at least a part is allowed to be viewed after the electronic book is purchased; control means for controlling the electronic book so that a part thereof whose viewing has been restricted is allowed to be viewed after the electronic book is purchased; and display means for displaying the contents of the electronic book being allowed to be viewed.

Further, an electronic book providing system according to one embodiment of the present invention includes: an electronic book providing server; and an information processing terminal, the electronic book providing server including: prediction means for predicting an electronic book to be purchased with high probability, and predicting the information processing terminal to be used to view the electronic book when the electronic book is purchased; and transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased, the information processing terminal including: reception means for receiving the file of the electronic book transmitted from the electronic book providing server; control means for controlling the electronic book so that a part thereof whose viewing has been restricted is allowed to be viewed after the electronic book is purchased; and display means for displaying the contents of the electronic book being allowed to be viewed.

Further, an electronic book transmission method according to one embodiment of the present invention includes: a prediction step of predicting an electronic book to be purchased with high probability, and predicting an information processing terminal to be used to view the electronic book when the electronic book is purchased; and a transmission step of transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

Further, a program according to one embodiment of the present invention causes a computer to function as: prediction means for predicting an electronic book to be purchased with high probability, and predicting an information processing terminal to be used to view the electronic book when the electronic book is purchased; and transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

Further, a recording medium according to one embodiment of the present invention is a recording medium having recorded thereon a program for causing a computer to function as: prediction means for predicting an electronic book to be purchased with high probability, and predicting an information processing terminal to be used to view the electronic book when the electronic book is purchased; and transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

In one embodiment of the present invention, the file of the electronic book which is predicted to be purchased with high probability and for which the transmission request has not been received is transmitted from the electronic book providing server to the information processing terminal before the purchase of the electronic book, but at this point in time, the user's viewing of at least a part of contents of the transmitted electronic book is restricted. Further, in one embodiment of the present invention, after the purchase of the electronic book, the user is allowed to view at least a part of the contents of the electronic book, but the electronic book whose viewing is to be allowed is not transmitted from the electronic book providing server to the information processing terminal after the purchase of the electronic book. In this manner, according to one embodiment of the present invention, the electronic book can be viewed by the user earlier than in the related art when the user desires to view the electronic book.

In one aspect of the present invention: the transmission means transmits, when a transmission request for a file for viewing having a smaller size than a size of the file of the electronic book that allows a part of the contents of the electronic book to be viewed is received from the information processing terminal, the file for viewing to the information processing terminal in response to the transmission request; the prediction means predicts the electronic book the the part of the contents of which is allowed to be viewed by the file for viewing, as the electronic book to be purchased with high probability; and the transmission means transmits the file of the electronic book which is predicted to be purchased with high probability to the information processing terminal in the state after the file for viewing is transmitted to the information processing terminal.

Further, in one aspect of the present invention, the transmission means starts transmitting the file of the electronic book which is predicted to be purchased with high probability to the information processing terminal after displaying of the file for viewing has been finished on the information processing terminal.

Further, in one aspect of the present invention, the prediction means predicts an electronic book that is another volume of an electronic book registered in a usage history of the electronic book providing server by a user of the information processing terminal or an electronic book written by the same author as an author of the electronic book registered in the usage history, as the electronic book to be purchased with high probability.

Further, in one aspect of the present invention, the electronic book providing server further includes designation reception means for receiving, from the information processing terminal of a user to be a presenter of a gift, designation of an electronic book to be a candidate for the gift and a user to be presented with the gift, and the prediction means predicts the electronic book designated as the candidate for the gift as the electronic book to be purchased with high probability, and predicts the information processing terminal of the user designated to be presented with the gift as the information processing terminal to be used to view the electronic book when the electronic book is purchased.

Further, in one aspect of the present invention: the electronic book providing server further includes display control means for controlling information corresponding to the electronic book designated as the candidate for the gift to be displayed on the information processing terminal of the user to be presented with the gift; in accordance with how the displayed information is selected, the contents of the electronic book corresponding to the selected information are allowed to be viewed on the information processing terminal of the user to be presented with the gift; and the electronic book providing server further includes means for controlling the file of the electronic book the information corresponding to which has not been selected to be deleted among the files of the electronic books transmitted to the information processing terminal of the user designated to be presented with the gift.

Further, in one aspect of the present invention, the transmission means transmits the file of the electronic book to the information processing terminal in a state in which viewing of contents other than a part designated by a user of the information processing terminal or a part identified based on a part quoted by another user is restricted before the purchase.

Further, in one aspect of the present invention, the transmission means transmits the file of the electronic book which is predicted to be purchased with high probability to the information processing terminal when a traffic amount of communications between the electronic book providing server and the information processing terminal of a transmission destination is smaller than a predetermined amount or when a value indicating a size of load on the information processing terminal of the transmission destination is smaller than a predetermined value.

Further, in one aspect of the present invention, the transmission means determines whether or not to transmit the file of the electronic book based on an unused capacity of a storage unit provided to the information processing terminal.

Further, in one aspect of the present invention, the electronic book providing server further includes means for determining whether or not to delete a file of an electronic book for which a purchase request has not been received among files of electronic books transmitted to the information processing terminal based on an unused capacity of a storage unit provided to the information processing terminal.

Further, in one aspect of the present invention: when the information processing terminal receives an input of a fact that the electronic book the viewing of the at least a part of the contents of which is restricted is to be purchased in a state in which it is impossible to perform communications between the electronic book providing server and the information processing terminal, the at least a part of the electronic book is controlled to be allowed to be viewed; and the electronic book providing server further includes payment processing execution means for receiving a purchase request for the electronic book from the information processing terminal when the communications between the electronic book providing server and the information processing terminal are enabled after the information processing terminal receives the input of the fact of being to be purchased, and executing payment processing in response to the purchase request.

### Brief Description of Drawings

FIG. 1 is an overall configuration diagram of an electronic book providing system according to a first embodiment of the present invention.
FIG. 2 shows an example of a data structure of electronic book management data.
FIG. 3 shows an example of a data structure of account data.
FIG. 4 is a diagram illustrating an example of an electronic book information page.
FIG. 5 is a functional block diagram illustrating an example of functions implemented by the electronic book providing system according to the first embodiment of the present invention.
FIG. 6 is a flowchart illustrating an example of a flow of processing performed by the electronic book providing system according to the first embodiment of the present invention.
FIG. 7 is a diagram illustrating another example of the electronic book information page.
FIG. 8 is a functional block diagram illustrating an example of functions implemented by an electronic book providing system according to a second embodiment of the present invention.
FIG. 9 is a flowchart illustrating an example of a flow of processing performed by the electronic book providing system according to the second embodiment of the present invention.
FIG. 10 is a diagram schematically illustrating an example of a gift candidate list page.
FIG. 11 is a diagram schematically illustrating an example of a selection page.
FIG. 12 is a functional block diagram illustrating an example of functions implemented by an electronic book providing system according to a third embodiment of the present invention.
FIG. 13 is a flowchart illustrating an example of a flow of processing performed by the electronic book providing system according to the third embodiment of the present invention.

### Description of Embodiments

### [First Embodiment]

Now, a first embodiment of the present invention is described in detail with reference to the accompanying drawings.

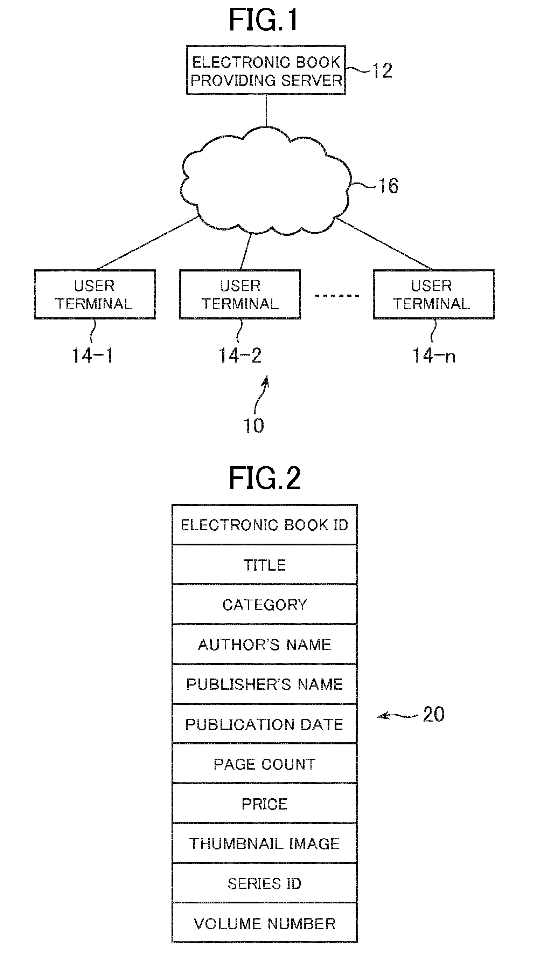

FIG. 1 is an overall configuration diagram of an electronic book providing system 10 according to the first embodiment of the present invention. As illustrated in FIG. 1, the electronic book providing system 10 according to this embodiment includes an electronic book providing server 12 and user terminals 14 (14-1, 14-2,..., 14-n), which are each formed mainly of a computer. The electronic book providing server 12 and the user terminals 14 are connected to a computer network 16 such as the Internet, to be able to communicate with each other.

The electronic book providing server 12 is a computer such as a Web server. Further, the electronic book providing server 12 according to this embodiment uses a Web technology to provide, for example, a service for transmitting an electronic book stored in the electronic book providing server 12 to the user terminal 14. Further, the electronic book providing server 12 according to this embodiment has a function of transmitting an electronic mail. Further, the electronic book providing server 12 includes, for example, a control unit, a storage unit, and a communication unit. The control unit is, for example, a program control device such as a CPU configured to operate in accordance with a program installed in the electronic book providing server 12. The storage unit is, for example, a memory device such as a ROM and a RAM or a hard disk drive. The communication unit is, for example, a communication interface such as a network board. Those components are connected to one another through a bus. The storage unit of the electronic book providing server 12 stores the program executed by the control unit of the electronic book providing server 12. Further, the storage unit of the electronic book providing server 12 operates as a work memory of the electronic book providing server 12.

The user terminal 14 is a computer used by a user of the electronic book providing system 10 and is, for example, a personal computer, a tablet-type terminal, a smartphone, and a mobile phone. The user terminal 14 includes, for example, a control unit such as a CPU, a storage unit such as a memory device, for example, a ROM and a RAM, and a hard disk drive, a display unit such as a display, an input unit such as a mouse, a keyboard, a touch panel, and a button, and a communication unit such as a network board. In addition, in the user terminal 14 according to this embodiment, a Web browser is installed in advance, and a program of the Web browser is executed. The user terminal 14 receives various services provided by the electronic book providing server 12 through the Web browser. Further, the user terminal 14, in which an electronic mail client is installed, is allowed to receive an electronic mail via a mail server.

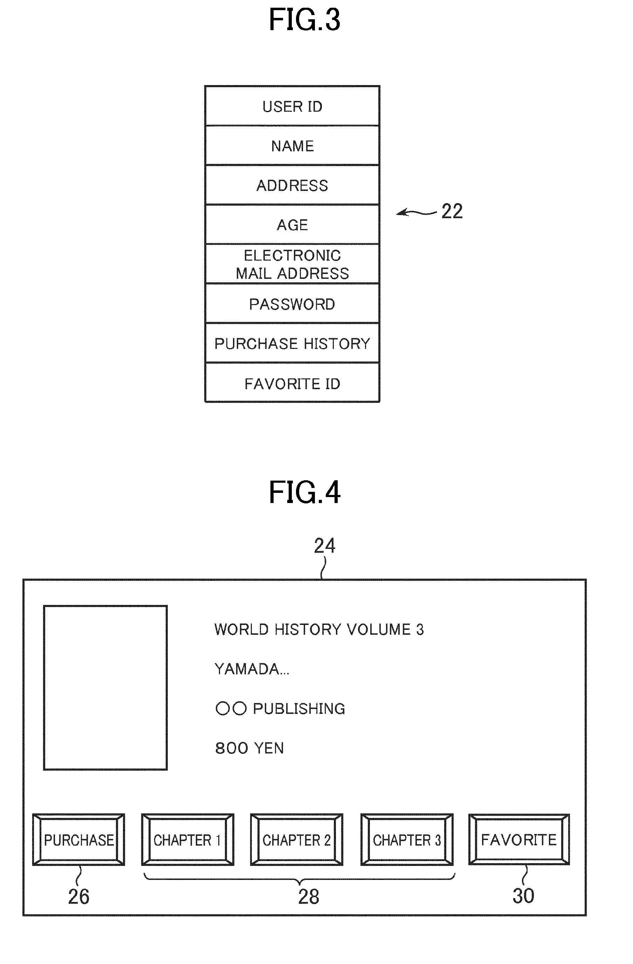

In this embodiment, the storage unit of the electronic book providing server 12 stores in advance a plurality of electronic books, electronic book management data 20 (see FIG. 2) for managing bibliographic items or the like on the electronic book, account data 22 (see FIG. 3) for managing an account of a user of the electronic book providing system 10, and the like. In this embodiment, the storage unit of the electronic book providing server 12 stores in advance the file of the electronic book.

FIG. 2 shows an example of a data structure of the electronic book management data 20. As shown in FIG. 2, the electronic book management data 20 includes, for example, an electronic book ID serving as an identifier of the electronic book, a title, a category, an author's name, a publisher's name, a publication date, a page count, a price, and a thumbnail image. Specific examples of the electronic book ID include an international standard book number (ISBN). Examples of the category include mystery, fantasy, and nonfiction. Further, in regard to electronic books formed of a plurality of volumes, the electronic book management data 20 includes, for example, a series ID for identifying an electronic book group formed of a plurality of volumes and a volume number. In this embodiment, for example, a value of the same series ID is set for the electronic books belonging to a given electronic book group.

FIG. 3 shows an example of a data structure of the account data 22. As shown in FIG. 3, the account data 22 includes a user ID for identifying a user who uses the electronic book providing system 10, a name, an address, an age, an electronic mail address, and a password for authenticating the user. Further, the account data 22 includes a combination of the electronic book ID of the electronic book purchased by the user and a purchase date as a purchase history of the user. Further, the account data 22 includes a favorite ID serving as the electronic book ID of a favorite electronic book registered in the electronic book providing server 12. In this embodiment, a plurality of combinations of the electronic book ID and the purchase date can be registered in the account data 22 as the purchase history. Further, in this embodiment, a plurality of electronic book IDs can be registered in the account data 22 as the favorite ID. Note that, the account data 22 may include the identification information on the user terminal 14 used by the user corresponding to the account data 22. The identification information is, for example, an IP address.

In this embodiment, when the user terminal 14 accesses the electronic book providing server 12 via a Web browser, inputs the user ID and the password, and then accesses a predetermined URL, a page corresponding to the predetermined URL is displayed on a display of the user terminal 14. Note that, after the user ID and the password are input, the electronic book providing server 12 can identify the user ID of the user who uses the user terminal 14 by, for example, referring to session information.

The electronic book providing server 12 according to this embodiment provides the user terminal 14 with an electronic book information page 24 indicating information relating to the electronic book that can be purchased by the user, which is exemplified in FIG. 4. In this embodiment, the user terminal 14 accesses a URL corresponding to the electronic book via the Web browser, to thereby display the electronic book information page 24 indicating the information relating to the electronic book on the display of the user terminal 14. The electronic book information page 24 includes a purchase button 26, a plurality of pre-purchase viewing part selection buttons 28 each of which corresponds to a chapter of the electronic book, and a favorite button 30 in addition to the information relating to the electronic book such as the thumbnail image, the title, the author's name, the publisher's name, and the price.

When the user clicks the favorite button 30 included in the electronic book information page 24, the user terminal 14 transmits a registration request that the electronic book whose information is indicated in the electronic book information page 24 be registered as a favorite, to the electronic book providing server 12. Then, the electronic book providing server 12 receives the registration request, and in response to the received registration request, adds the electronic book ID of this electronic book to the favorite ID of the account data 22 including the user ID of the user.

Further, when the user clicks the pre-purchase viewing part selection button 28 included in the electronic book information page 24, contents of a selected part of the electronic book, which correspond to a part of contents of the electronic book corresponding to the electronic book information page 24, are displayed on the display of the user terminal 14. The selected part represents, for example, a part identified based on the clicked pre-purchase viewing part selection button 28. In this embodiment, for example, two pages of the contents of the electronic book are displayed on the display of the user terminal 14, and the page being displayed can be advanced or returned in accordance with the user's operation. Further, in this embodiment, before the purchase of the electronic book, the first predetermined number of pages of the chapter corresponding to the clicked pre-purchase viewing part selection button 28 can only be viewed on the user terminal 14.

Further, when the user clicks the purchase button 26 included in the electronic book information page 24, the user terminal 14 transmits a purchase request for the electronic book whose information is indicated in the electronic book information page 24 to the electronic book providing server 12. Then, the electronic book providing server 12 receives the purchase request, and in response to the received purchase request, executes payment processing for the electronic book. After the payment processing for the electronic book is executed, all the contents of the electronic book can be viewed on the user terminal 14.

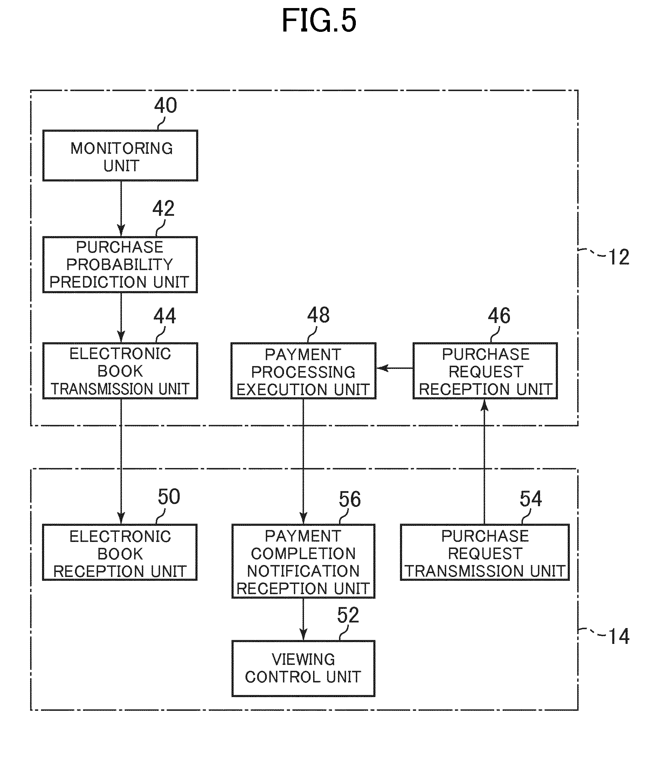

FIG. 5 is a functional block diagram illustrating an example of functions implemented by the electronic book providing system 10 according to this embodiment. Note that, in the electronic book providing system 10 according to this embodiment, functions other than the functions illustrated in FIG. 5 are also implemented.

The electronic book providing server 12 according to this embodiment functionally includes a monitoring unit 40, a purchase probability prediction unit 42, an electronic book transmission unit 44, a purchase request reception unit 46, andapaymentprocessing execution unit 48. Those components are implemented by executing the programs installed in the electronic book providing server 12, which is a computer, by the control unit of the electronic book providing server 12. Note that, the programs are supplied to the electronic book providing server 12 via, for example, a computer-readable recording medium such as a CD-ROM and a DVD-ROM, or via a communication network such as the Internet. Note that, prediction means of an electronic book providing server disclosed in Claims corresponds to the purchase probability prediction unit 42 according to this embodiment. Further, transmission means of the electronic book providing server disclosed in Claims corresponds to the electronic book transmission unit 44 according to this embodiment. Further, payment processing execution means of the electronic book providing server disclosed in Claims corresponds to the payment processing execution unit 48 according to this embodiment.

The user terminal 14 according to this embodiment functionally includes an electronic book reception unit 50, a viewing control unit 52, a purchase request transmission unit 54, and a payment completion notification reception unit 56. Those components are implemented by executing the programs installed in the user terminal 14, which is a computer, by the control unit of the user terminal 14. Note that, the programs are supplied to the user terminal 14 via, for example, a computer-readable recording medium such as a CD-ROM and a DVD-ROM, or via a communication network such as the Internet. Note that, reception means of an information processing terminal disclosed in Claims corresponds to the electronic book reception unit 50 according to this embodiment. Further, display means of the information processing terminal disclosed in Claims corresponds to the display of the user terminal 14 according to this embodiment. Further, control means of the information processing terminal disclosed in Claims corresponds to the viewing control unit 52 according to this embodiment.

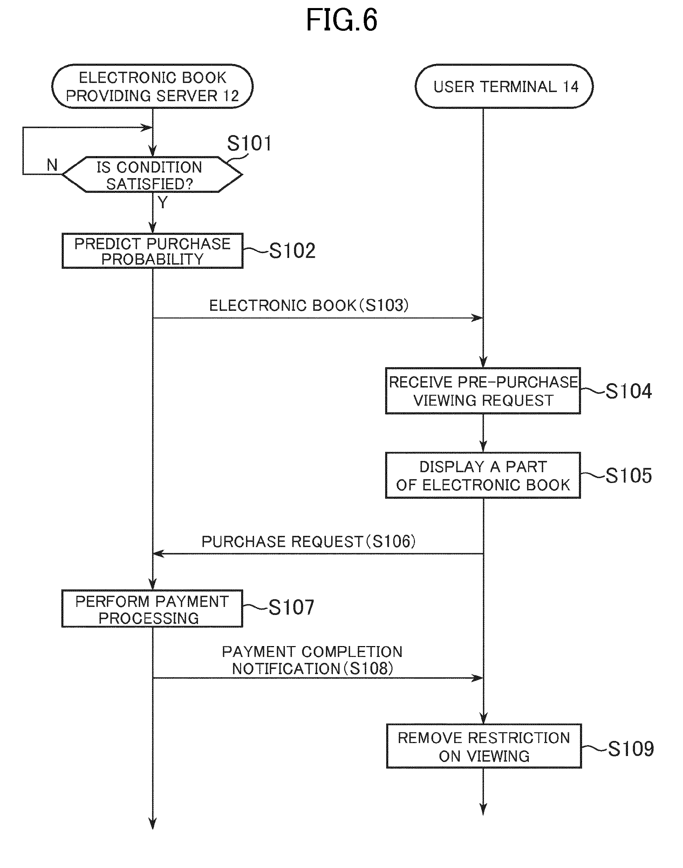

Here, an example of a flow of processing performed by the electronic book providing system 10 according to this embodiment is described with reference to a flowchart illustrated in FIG. 6.

First, the monitoring unit 40 of the electronic book providing server 12 continues monitoring a monitoring target until a predetermined condition relating to a traffic amount of communications between the electronic book providing server 12 and the user terminal 14, a load on the user terminal 14, a usage amount of a resource of the user terminal 14, and the like is satisfied (S101). Here, the load represents, for example, a CPU usage rate. Further, the usage amount of the resource represents, for example, the usage amount of the storage unit. In this embodiment, a size of an area reserved for storing the electronic book on the user terminal 14 is defined in advance. This area is hereinafter referred to as "storage area". Then, in this processing example, the monitoring unit 40 monitors an unused capacity of the storage area of the user terminal 14 and the traffic amount of the communications between the electronic book providing server 12 and the user terminal 14.

When the monitoring unit 40 of the electronic book providing server 12 detects that the predetermined condition has been satisfied (S101: Y), the purchase probability prediction unit 42 executes prediction of a probability that the electronic book stored in the electronic book providing server 12 is purchased by the user of the user terminal 14 (S102). In this processing example, for example, when the monitoring unit 40 detects that the condition that a value indicating a size of the unused capacity of the storage area of the user terminal 14 exceeds the predetermined value and that the traffic amount of the communications between the electronic book providing server 12 and the user terminal 14 is smaller than the predetermined amount is satisfied, the purchase probability prediction unit 42 executes the prediction of the probability that the electronic book is purchased.

In this embodiment, the purchase probability prediction unit 42 predicts, for example, the electronic book identified based on an attribute of the user of the user terminal 14, another electronic book associated with this electronic book, and the like as the electronic book to be purchased by the user with high probability.

Further, for example, the purchase probability prediction unit 42 predicts the electronic book to be purchased with high probability based on a usage history of the user of the user terminal 14. The usage history represents the purchase history of the electronic book, a view history of the Web page provided by the electronic book providing server 12, a registration history of the favorite, and the like. This usage history is stored in the electronic book providing server 12. When predicting the electronic book based on the usage history, the purchase probability prediction unit 42 predicts, for example, an electronic book that is another volume of an electronic book registered in the usage history or an electronic book written by the same author as that of the electronic book registered in the usage history as the electronic book to be purchased with high probability. Further, in this embodiment, the purchase probability prediction unit 42 predicts the user terminal 14 of the user, the usage history of which has been used as a basis of the prediction of the electronic book to be purchased with high probability, as the user terminal 14 to be used to view the electronic book when the electronic book predicted to be purchased with high probability is purchased.

Further, for example, an electronic book whose author's name is the same as that of any one of electronic books that have been purchased by the user may be predicted as the electronic book to be purchased by the user with high probability. Further, for example, an electronic book under the same category as that of any one of the electronic books that have been purchased by the user may be predicted as the electronic book to be purchased by the user with high probability. Further, for example, an electronic book corresponding to the same publisher's name as that of any one of the electronic books that have been purchased by the user may be predicted as the electronic book to be purchased by the user with high probability. Further, for example, an electronic book published in the same year as that of any one of the electronic books that have been purchased by the user may be predicted as the electronic book to be purchased by the user with high probability. Further, for example, an electronic book whose author's name is the same as that of any one of the electronic books registered as the favorite by the user may be predicted as the electronic book to be purchased by the user with high probability. Further, for example, an electronic book under the same category as that of any one of the electronic books registered as the favorite by the user may be predicted as the electronic book to be purchased by the user with high probability. Further, for example, an electronic book a part of the contents of which has been displayed after the pre-purchase viewing part selection button 28 was clicked by the user may be predicted as the electronic book to be purchased by the user with high probability. Further, for example, an electronic book corresponding to the same series ID as that of the electronic book a part of the contents of which has been displayed after the pre-purchase viewing part selection button 28 was clicked by the user may be predicted as the electronic book to be purchased by the user with high probability. Further, for example, an electronic book corresponding to the same series ID as and having a larger volume number than that of the electronic book a part of the contents of which has been displayed after the pre-purchase viewing part selection button 28 was clicked by the user, that is, an electronic book published subsequently thereto, may be predicted as the electronic book to be purchased by the user with high probability.

In addition to the ones described above, for example, the first predetermined number of electronic books provided by the electronic book providing server 12 in descending order of a quantity sold may be predicted as the electronic books to be purchased by the user of the user terminal 14 with high probability. Specifically, for example, the first ten electronic books provided by the electronic book providing server 12 in descending order of the quantity sold may be predicted as the electronic book to be purchased by the user of the user terminal 14 with high probability. Alternatively, for example, an electronic book corresponding to the electronic book information page 24 being viewed for a longer time than a predetermined time may be predicted as the electronic book to be purchased by the user of the user terminal 14 with high probability. Specifically, for example, an electronic book corresponding to the electronic book information page 24 that has not made a page transition for equal to or longer than a predetermined time after being displayed may be predicted as the electronic book to be purchased by the user of the user terminal 14 with high probability.

Alternatively, for example, the first predetermined number of electronic books in descending order of the quantity sold to users in the same age group, which is identified based on the age included in the account data 22 of the user of the user terminal 14, may be predicted as the electronic books to be purchased by the user of the user terminal 14 with high probability. Further, for example, the first predetermined number of electronic books in descending order of the quantity sold to users residing in a neighborhood, which is identified based on the address included in the account data 22 of the user of the user terminal 14, may be predicted as the electronic books to be purchased by the user of the user terminal 14 with high probability. Here, the users in the same age group represent, for example, users in their twenties, users in their thirties, or the like. Further, the predetermined number represents, for example, ten. Further, the users residing in the neighborhood represent, for example, users residing in the addresses included in the same area. Further, the electronic book to be purchased by the user with high probability may be predicted based on, for example, the purchase history of the user on a shopping site other than the electronic book providing server 12.

Then, the electronic book transmission unit 44 transmits at least one electronic book, which is predicted as the electronic book to be purchased by the user of the user terminal 14 with high probability in the processing of S102, to the user terminal 14. Here, for example, the electronic book transmission unit 44 transmits the at least one electronic book predicted as the electronic book to be purchased by the user of the user terminal 14 with high probability to the user terminal 14 predicted to be used to view the electronic book when the electronic book is purchased. Then, the electronic book reception unit 50 of the user terminal 14 receives the at least one electronic book (S103). The electronic book received by the user terminal 14 is saved to the storage unit of the user terminal 14. In this stage, the electronic book saved to the storage unit is in a state in which only a part designated by the user can be viewed. After that, in regard to any one of the received at least one electronic book, when the pre-purchase viewing part selection button 28 included in the electronic book information page 24 corresponding to the electronic book is clicked by the user, the viewing control unit 52 of the user terminal 14 receives an input of a pre-purchase viewing request regarding the electronic book (S104). Then, the viewing control unit 52 of the user terminal 14 displays a part of the contents of the electronic book, which falls within a range of the first predetermined number of pages of the chapter corresponding to the clicked pre-purchase viewing part selection button 28, on the display of the user terminal 14 (S105). In this processing example, before the purchase of the electronic book, entire data on the electronic book including data part whose viewing is restricted is stored in the storage unit of the user terminal 14, but, for example, the data part whose viewing is restricted is encrypted to be brought into a state in which the viewing is restricted. Here, the above-mentioned part whose viewing is restricted represents, for example, a part that cannot be viewed.

After that, when the user clicks the purchase button 26 included in the electronic book information page 24 corresponding to the electronic book wished to be purchased, the purchase request transmission unit 54 of the user terminal 14 transmits the purchase request for the electronic book to the electronic book providing server 12. Then, the purchase request reception unit 46 of the electronic book providing server 12 receives the purchase request (S106). Then, the payment processing execution unit 48 of the electronic book providing server 12 executes the payment processing for the electronic book (S107).

When the payment processing is completed, the payment processing execution unit 48 of the electronic book providing server 12 transmits a notification indicating that the payment processing has been completed to the user terminal 14. Then, the payment completion notification reception unit 56 of the user terminal 14 receives the notification (S108). Then, the viewing control unit 52 of the user terminal 14 removes a restriction on the viewing of the electronic book for which the payment processing has been completed (S109). Here, for example, the viewing control unit 52 of the user terminal 14 controls the electronic book so that a part thereof whose viewing has been restricted can be viewed. In this manner, when the payment processing for the electronic book is completed, the user who has purchased the electronic book is allowed to view all the contents of the electronic book on the user terminal 14.

It is conceivable to use various methods for restricting the viewing of a part or an entirety of the electronic book and controlling the electronic book to change from a state in which the viewing is not allowed to a state in which the viewing is allowed.

For example, in the processing of S103, the electronic book may be transmitted in an encrypted state from the electronic book providing server 12 to the user terminal 14 along with a decryption key. Then, in the processing of S105, the part designated by the user may be decoded by the decryption key. Then, in the processing of S109, a remaining part of the electronic book may be decoded by the decryption key. Further, for example, in the processing of S103, the electronic book may be transmitted in the encrypted state from the electronic book providing server 12 to the user terminal 14. Then, in the processing of S105, the decryption key may be transmitted from the electronic book providing server 12 to the user terminal 14, and the part designated by the user may be decoded by the decryption key. Then, in the processing of S109, the remaining part of the electronic book may be decoded by the decryption key. Further, for example, in the processing of S103, the electronic book may be transmitted in the encrypted state from the electronic book providing server 12 to the user terminal 14. Then, in the processing of S105, the decryption key regarding the part designated by the user may be transmitted from the electronic book providing server 12 to the user terminal 14, and the part designated by the user may be decoded by the decryption key. Then, in the processing of S109, the decryption key regarding the remaining part of the electronic book may be transmitted from the electronic book providing server 12 to the user terminal 14, and the remaining part of the electronic book may be decoded by the decryption key.

Further, for example, in the processing of S103, a bit string that forms the electronic book may be transmitted in a shifted state from the electronic book providing server 12 to the user terminal 14. Then, in the processing of S105, the bit string regarding the part designated by the user may be returned to an original state. Then, in the processing of S109, the bit string regarding the remaining part of the electronic book may be returned to an original state. Further, for example, in the processing of S105, a part of the electronic book other than the part designated by the user may be displayed in a masked state. Then, in the processing of S109, the mask may be removed.

Further, in the processing of S103, the electronic book may be transmitted from the electronic book providing server 12 to the user terminal 14 in such a mode that the contents of the electronic book are expressed differently from original contents thereof. Note that, various known digital rights management (DRM) technologies can be utilized for restricting the viewing of a part or an entirety of the electronic book and controlling the electronic book to change from the state in which the viewing is not allowed to the state in which the viewing is allowed.

Further, the above-mentioned processing of S102 to S109 may be executed at, for example, a predetermined time during nighttime hours. Further, the above-mentioned processing of S102 to S109 may be executed when, for example, it is confirmed at a predetermined time during nighttime hours that the condition that the value indicating the size of the unused capacity of the storage area of the user terminal 14 exceeds the predetermined value and that the traffic amount of the communications between the electronic book providing server 12 and the user terminal 14 is smaller than the predetermined amount is satisfied.

Further, in the first embodiment, the electronic book providing server 12 may include a determination unit for determining, based on the unused capacity of the storage area of the user terminal 14, whether or not to delete an electronic book for which the purchase request has not been received among the electronic books transmitted to the user terminal 14. The determination unit corresponds to "means for determining whether or not to delete a file of an electronic book for which a purchase request has not been received" of the electronic book providing server disclosed in Claims. When it is determined that the unused capacity of the storage area becomes equal to or smaller than a predetermined value, the electronic book providing server 12 may control the electronic book that has not been purchased yet to be deleted from the storage unit of the user terminal 14. With this configuration, the unused capacity of the storage unit of the user terminal 14 can be reserved. Note that, at this time, for example, the electronic books may be deleted in ascending order of a date/time of being transmitted from the electronic book providing server 12, or the electronic book that has been stored for a predetermined period since the date/time of being transmitted from the electronic book providing server 12 may be deleted.

Further, in the first embodiment, the user terminal 14 may monitor the unused capacity of the storage area of the user terminal 14. When the user terminal 14 determines that the unused capacity of the storage area of the user terminal 14 becomes equal to or smaller than a predetermined value, the user terminal 14 may delete the electronic book that has not been purchased yet from the storage unit of the user terminal 14.

Further, when the value indicating the size of the unused capacity of the storage area of the user terminal 14 exceeds the predetermined value, the electronic book transmission unit 44 may start transmitting the electronic book after a time equal to or larger than a predetermined time has elapsed since the electronic book information page 24 was displayed.

In this embodiment, the file of the electronic book which is predicted to be purchased with high probability and for which a transmission request has not been received is transmitted from the electronic book providing server 12 to the user terminal 14 before the purchase. Here, the file of the electronic book which is predicted to be purchased with high probability and for which a transmission request has not been received is transmitted from the electronic book providing server 12 to the user terminal 14 before the payment processing is executed. However, at this point in time, the user's viewing of the contents of the transmitted electronic book is restricted except for a part that can be viewed by clicking the pre-purchase viewing part selection button 28. Then, in this embodiment, after the purchase, the user is allowed to view all the contents of the electronic book. Here, after the payment processing is executed, the user is allowed to view all the contents of the electronic book. However, after the purchase, the electronic book whose viewing is to be allowed is not transmitted from the electronic book providing server 12 to the user terminal 14. Here, after the payment processing is executed, the electronic book whose viewing is to be allowed is not transmitted from the electronic book providing server 12 to the user terminal 14. In this manner, in this embodiment, when the user desires to view the electronic book, the electronic book can be viewed by the user earlier than in the related art. Note that, in this embodiment, the above-mentioned wording "after the purchase" is not limited to the wording "after the payment processing is executed". For example, the user may be allowed to view all the contents of the electronic book even before the payment processing is executed after the electronic book providing server 12 receives the purchase request for the electronic book from the user terminal 14.

Further, in this embodiment, when the traffic amount of the communications between the electronic book providing server 12 and the user terminal 14 is smaller than the predetermined amount, the electronic book is transmitted from the electronic book providing server 12 to the user terminal 14, which can prevent the network from being tightened by the transmission of the electronic book. Further, with this configuration, it is possible to suppress an amount to be billed when the user is billed based on a time taken for communications between the electronic book providing server 12 and the user terminal 14.

Further, in this embodiment, when the value indicating the size of the unused capacity of the storage area of the user terminal 14 exceeds the predetermined value, the electronic book is transmitted from the electronic book providing server 12 to the user terminal 14, which allows the unused capacity of the storage area of the user terminal 14 to be reserved.

Further, in this embodiment, a part of the contents of the electronic book within a range designated by the user can be viewed, which increases a degree of freedom of the range of the electronic book that can be viewed.

Note that, in this embodiment, for example, the electronic book providing server 12 may receive a part identified based on a part quoted by another user who has purchased the electronic book from the another user. The part quoted by the another user can be identified when, for example, the another user posts a comment or the like by quoting a part of the electronic book. Then, before the payment, the electronic book providing server 12 may transmit the electronic book to the user terminal 14 in a state in which only the contents about the above-mentioned part can be viewed. With this configuration, before the payment, the user is allowed to view the contents of the part of the electronic book in which another user is interested.

### [Second embodiment]

Now, a second embodiment of the present invention is described in detail with reference to the accompanying drawings.

An overall configuration diagram of the electronic book providing system 10 according to the second embodiment of the present invention is the same as that illustrated in FIG. 1. The electronic book providing system 10 according to the second embodiment includes the electronic book providing server 12 and the user terminals 14 (14-1, 14-2,..., 14-n), which are the same as those of the first embodiment and are each formed mainly of a computer. The electronic book providing server 12 and the user terminals 14 are connected to the computer network 16 such as the Internet, to be able to communicate with each other.

In this embodiment, in the same manner as in the first embodiment, the storage unit of the electronic book providing server 12 stores in advance a plurality of electronic books, the electronic book management data 20 exemplified in FIG. 2, the account data 22 exemplified in FIG. 3, and the like. Further, the storage unit of the electronic book providing server 12 according to this embodiment stores in advance a file for pre-purchase viewing, which is a file having a smaller size than that of the electronic book and which allows a part of the contents of the electronic book to be viewed, in association with the electronic book. In this embodiment, for example, a file for pre-purchase viewing, which is a file having a smaller size than the electronic book and in which a part of the contents of the electronic book is described, is stored in advance in association with the electronic book.

Also in this embodiment, when the user terminal 14 accesses the electronic book providing server 12 via the Web browser, inputs the user ID and the password, and then accesses a predetermined URL, a page corresponding to the predetermined URL is displayed on the display of the user terminal 14. Note that, after the user ID and the password are input, the electronic book providing server 12 can identify the user ID of the user who uses the user terminal 14 by referring to, for example, the session information.

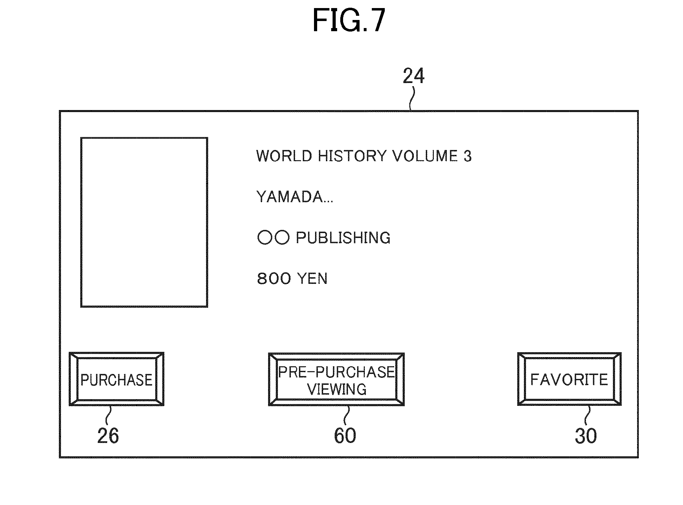

The electronic book providing server 12 according to this embodiment provides the user terminal 14 with the electronic book information page 24 indicating the information relating to the electronic book that can be purchased by the user, which is exemplified in FIG. 7 and is different from the one exemplified in FIG. 4. In this embodiment, the user terminal 14 accesses a URL corresponding to the electronic book via the Web browser, to thereby display the electronic book information page 24 indicating the information relating to this electronic book on the display of the user terminal 14. The electronic book information page 24 includes a purchase button 26, a pre-purchase viewing button 60, and a favorite button 30 in addition to the information relating to the electronic book such as the thumbnail image, the title, the author's name, the publisher's name, and the price.

When the user clicks the favorite button 30 included in the electronic book information page 24, the user terminal 14 transmits a registration request that the electronic book whose information is indicated in the electronic book information page 24 be registered as a favorite, to the electronic book providing server 12. Then, the electronic book providing server 12 receives the registration request, and in response to the received registration request, adds the electronic book ID of this electronic book to the favorite ID of the account data 22 including the user ID of the user.

Further, when the user clicks the pre-purchase viewing button 60 included in the electronic book information page 24, contents of the file for pre-purchase viewing, which correspond to the electronic book corresponding to the electronic book information page 24, are displayed on the display of the user terminal 14. In this embodiment, for example, two pages of the contents of the electronic book are displayed on the display of the user terminal 14, and the page being displayed can be advanced or returned in accordance with the user's operation.

Further, when the user clicks the purchase button 26 included in the electronic book information page 24, the user terminal 14 transmits a purchase request for the electronic book whose information is indicated in the electronic book information page 24 to the electronic book providing server 12. Then, the electronic book providing server 12 receives the purchase request, and in response to the received purchase request, executes payment processing for the electronic book. After the payment processing for the electronic book is executed, all the contents of the electronic book can be viewed on the user terminal 14.

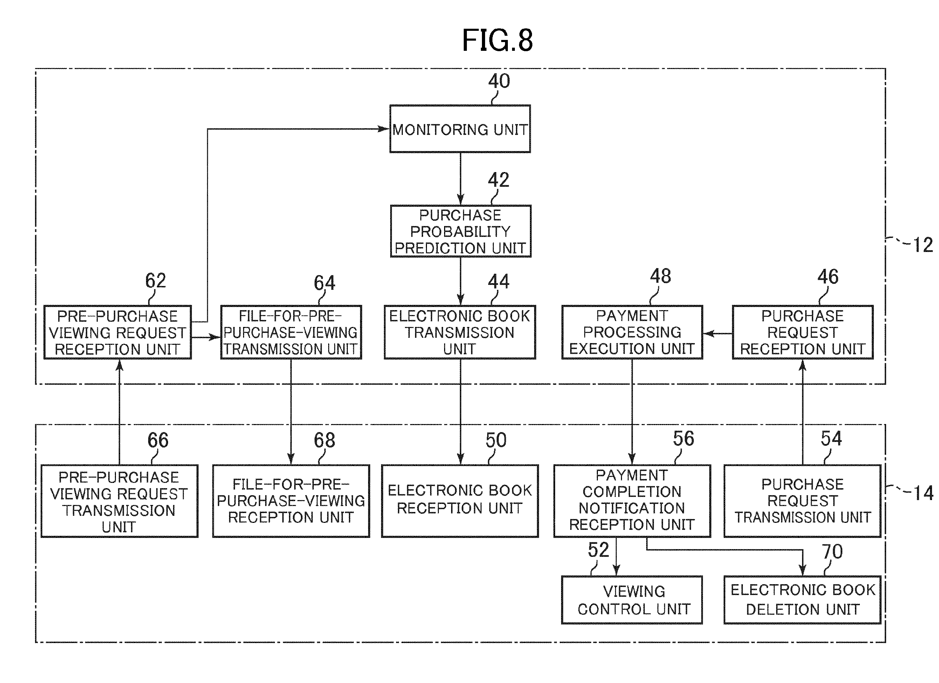

FIG. 8 is a functional block diagram illustrating an example of functions implemented by the electronic book providing system 10 according to this embodiment. Note that, in the electronic book providing system 10 according to this embodiment, functions other than the functions illustrated in FIG. 8 are also implemented.

The electronic book providing server 12 according to this embodiment functionally includes a monitoring unit 40, a purchase probability prediction unit 42, an electronic book transmission unit 44, a purchase request reception unit 46, a payment processing execution unit 48, a pre-purchase viewing request reception unit 62, and a file-for-pre-purchase-viewing transmission unit 64. Those components are implemented by executing the programs installed in the electronic book providing server 12, which is a computer, by the control unit of the electronic book providing server 12. Note that, the programs are supplied to the electronic book providing server 12 via, for example, a computer-readable recording medium such as a CD-ROM and a DVD-ROM, or via a communication network such as the Internet. Note that, the prediction means of the electronic book providing server disclosed in Claims corresponds to the purchase probability prediction unit 42 according to this embodiment. Further, the transmission means of the electronic book providing server disclosed in Claims corresponds to the electronic book transmission unit 44 according to this embodiment. Further, the payment processing execution means of the electronic book providing server disclosed in Claims corresponds to the payment processing execution unit 48 according to this embodiment.

The user terminal 14 according to this embodiment functionally includes an electronic book reception unit 50, a viewing control unit 52, a purchase request transmission unit 54, a payment completion notification reception unit 56, a pre-purchase viewing request transmission unit 66, a file-for-pre-purchase-viewing reception unit 68, and an electronic book deletion unit 70. Those components are implemented by executing the programs installed in the user terminal 14, which is a computer, by the control unit of the user terminal 14. Note that, the programs are supplied to the user terminal 14 via, for example, a computer-readable recording medium such as a CD-ROM and a DVD-ROM, or via a communication network such as the Internet. Note that, the reception means of the information processing terminal disclosed in Claims corresponds to the electronic book reception unit 50 according to this embodiment. Further, the display means of the information processing terminal disclosed in Claims corresponds to the display of the user terminal 14 according to this embodiment. Further, the control means of the information processing terminal disclosed in Claims corresponds to the viewing control unit 52 according to this embodiment.

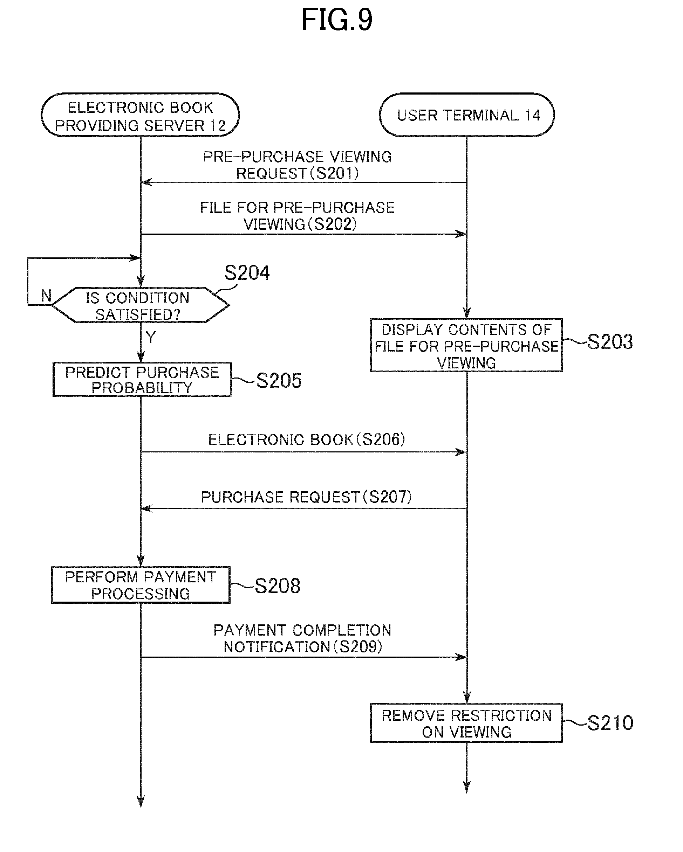

Here, an example of a flow of processing performed by the electronic book providing system 10 according to this embodiment is described with reference to a flowchart illustrated in FIG. 9.

First, when the user clicks the pre-purchase viewing button 60 included in the electronic book information page 24, the pre-purchase viewing request transmission unit 66 of the user terminal 14 transmits a pre-purchase viewing request for the electronic book corresponding to the electronic book information page 24 to the electronic book providing server 12. Then, the pre-purchase viewing request reception unit 62 of the electronic book providing server 12 receives the pre-purchase viewing request for the electronic book (S201). Then, the file-for-pre-purchase-viewing transmission unit 64 of the electronic book providing server 12 transmits the file for pre-purchase viewing stored in association with the electronic book to the user terminal 14. Then, the file-for-pre-purchase-viewing reception unit 68 of the user terminal 14 receives the file (S202). The file received by the user terminal 14 is saved to the storage unit of the user terminal 14. Then, the viewing control unit 52 of the user terminal 14 displays the contents of the file on the display of the user terminal 14 (S203).

In parallel to the processing of S202, the monitoring unit 40 of the electronic book providing server 12 continues monitoring a monitoring target until a predetermined condition relating to a traffic amount between the electronic book providing server 12 and the user terminal 14, a load on the user terminal 14, a usage amount of a resource of the user terminal 14, and the like is satisfied (S204). Here, the load represents, for example, a CPU usage rate. Further, the usage amount of the resource represents, for example, the usage amount of the storage unit. In this embodiment, a size of an area reserved for storing the electronic book and the file for pre-purchase viewing on the user terminal 14 is defined in advance. This area is hereinafter referred to as "storage area". Then, in this processing example, the monitoring unit 40 monitors the unused capacity of the storage area of the user terminal 14 and monitors whether or not the displaying of the file for pre-purchase viewing on the display of the user terminal 14 has been finished.

When the monitoring unit 40 of the electronic book providing server 12 detects that the predetermined condition has been satisfied (S204: Y), the purchase probability prediction unit 42 executes prediction of a probability that the electronic book stored in the electronic book providing server 12 is purchased by the user of the user terminal 14 (S205). In this processing example, for example, when the monitoring unit 40 detects that the condition that the value indicating the size of the unused capacity of the storage area of the user terminal 14 exceeds the predetermined value and that the displaying of the file for pre-purchase viewing on the user terminal 14 has been finished, the purchase probability prediction unit 42 executes the prediction of the probability that the electronic book is purchased.

In this embodiment, for example, the purchase probability prediction unit 42 may predict the electronic book for which the corresponding file for pre-purchase viewing has been transmitted to the user terminal 14, as the electronic book to be purchased by the user of the user terminal 14 with high probability. Further, for example, the purchase probability prediction unit 42 may predict an electronic book corresponding to the same series ID as that of the electronic book for which the corresponding file for pre-purchase viewing has been transmitted to the user terminal 14, as the electronic book to be purchased by the user of the user terminal 14 with high probability. Further, for example, the purchase probability prediction unit 42 may predict an electronic book corresponding to the same series ID as and having a larger volume number than that of the electronic book for which the corresponding file for pre-purchase viewing has been transmitted to the user terminal 14, that is, an electronic book published subsequently thereto, as the electronic book to be purchased by the user of the user terminal 14 with high probability. Further, in this embodiment, the purchase probability prediction unit 42 predicts the user terminal 14 to which the corresponding file for pre-purchase viewing has been transmitted, as the user terminal 14 used to view the electronic book when the electronic book predicted to be purchased with high probability is purchased.

In addition to the ones described above, for example, an electronic book whose author' name is the same as that of any one of electronic books that have been purchased by the user may be predicted as the electronic book to be purchased by the user with high probability. Further, for example, an electronic book under the same category as that of any one of the electronic books that have been purchased by the user may be predicted as the electronic book to be purchased by the user with high probability. Further, for example, an electronic book corresponding to the same publisher' s name as that of any one of the electronic books that have been purchased by the user may be predicted as the electronic book to be purchased by the user with high probability. Further, for example, an electronic book published in the same year as that of any one of the electronic books that have been purchased by the user may be predicted as the electronic book to be purchased by the user with high probability. Further, for example, an electronic book whose author's name is the same as that of any one of the electronic books registered as the favorite by the user may be predicted as the electronic book to be purchased by the user with high probability. Further, for example, an electronic book under the same category as that of any one of the electronic books registered as the favorite by the user may be predicted as the electronic book to be purchased by the user with high probability.

Alternatively, for example, the first predetermined number of electronic books provided by the electronic book providing server 12 in descending order of a quantity sold may be predicted as the electronic books to be purchased by the user of the user terminal 14 with high probability. Specifically, for example, the first ten electronic books provided by the electronic book providing server 12 in descending order of the quantity sold may be predicted as the electronic book to be purchased by the user of the user terminal 14 with high probability. Alternatively,for example,an electronic book corresponding to the electronic book information page 24 being viewed for a longer time than a predetermined time may be predicted as the electronic book to be purchased by the user with high probability. Specifically, for example, an electronic book corresponding to the electronic book information page 24 that has not made a page transition for equal to or longer than a predetermined time after being displayed may be predicted as the electronic book to be purchased by the user of the user terminal 14 with high probability.

Alternatively, for example, the first predetermined number of electronic books in descending order of the quantity sold to users in the same age group, which is identified based on the age included in the account data 22 of the user of the user terminal 14, may be predicted as the electronic books to be purchased by the user of the user terminal 14 with high probability. Further, for example, the first predetermined number of electronic books in descending order of the quantity sold to users residing in a neighborhood, which is identified based on the address included in the account data 22 of the user of the user terminal 14, may be predicted as the electronic books to be purchased by the user of the user terminal 14 with high probability. Here, the users in the same age group represent, for example, users in their twenties, users in their thirties, or the like. Further, the predetermined number represents, for example, ten. Further, the users residing in the neighborhood represent, for example, users residing in the addresses included in the same area.

Then, the electronic book transmission unit 44 transmits at least one electronic book, which is predicted as the electronic book to be purchased by the user of the user terminal 14 with high probability in the processing of S205, to the user terminal 14. Here, for example, the electronic book transmission unit 44 transmits the at least one electronic book predicted as the electronic book to be purchased by the user of the user terminal 14 with high probability to the user terminal 14 predicted to be used to view the electronic book when the electronic book is purchased. Then, the electronic book reception unit 50 of the user terminal 14 receives the at least one electronic book (S206). The electronic book received by the user terminal 14 is saved to the storage unit of the user terminal 14. In this stage, the electronic book saved to the storage unit is in a state in which the viewing is not allowed.

After that, when the user clicks the purchase button 26 included in the electronic book information page 24 corresponding to the electronic book wished to be purchased, the purchase request transmission unit 54 of the user terminal 14 transmits the purchase request for the electronic book to the electronic book providing server 12. Then, the purchase request reception unit 46 of the electronic book providing server 12 receives the purchase request (S207). Then, the payment processing execution unit 48 of the electronic book providing server 12 executes the payment processing for the electronic book (S208).

When the payment processing is completed, the payment processing execution unit 48 of the electronic book providing server 12 transmits a notification indicating that the payment processing has been completed to the user terminal 14. Then, the payment completion notification reception unit 56 of the user terminal 14 receives the notification (S209). Then, the viewing control unit 52 of the user terminal 14 removes a restriction on the viewing of the electronic book for which the payment processing has been completed (S210). Here, for example, the viewing control unit 52 of the user terminal 14 controls the electronic book for which the payment processing has been completed so that a part thereof whose viewing has been restricted can be viewed. In this manner, when the payment processing for the electronic book is completed, the user who has purchased the electronic book is allowed to view all the contents of the electronic book on the user terminal 14.

It is conceivable to use such various methods as described above in the first embodiment for restricting the viewing of the electronic book and controlling the electronic book to change from a state in which the viewing is not allowed to a state in which the viewing is allowed.

In this embodiment, the file of the electronic book which is predicted to be purchased by the user with high probability and for which a transmission request has not been received is transmitted from the electronic book providing server 12 to the user terminal 14 before the purchase. Here, the file of the electronic book which is predicted to be purchased by the user with high probability and for which a transmission request has not been received is transmitted from the electronic book providing server 12 to the user terminal 14 before the payment processing is executed. However, at this point in time, the user is not allowed to view the entire electronic book. Note that, at this time, the user can view the file for pre-purchase viewing stored in the electronic book providing server 12 in association with the electronic book. Then, in this embodiment, after the purchase, the user is allowed to view all the contents of the electronic book. Here, after the payment processing is executed, the user is allowed to view all the contents of the electronic book. However, after the purchase, the electronic book whose viewing is to be allowed is not transmitted from the electronic book providing server 12 to the user terminal 14. Here, after the payment processing is executed, the electronic book whose viewing is to be allowed is not transmitted from the electronic book providing server 12 to the user terminal 14. In this manner, in this embodiment, when the user desires to view the electronic book, the electronic book can be viewed by the user earlier than in the related art. Note that, in this embodiment, the above-mentioned wording "after the purchase" is not limited to the wording "after the payment processing is executed". For example, the user may be allowed to view all the contents of the electronic book even before the payment processing is executed after the electronic book providing server 12 receives the purchase request for the electronic book from the user terminal 14.

Further, in this embodiment, after the displaying of the file for pre-purchase viewing on the display of the user terminal 14 is finished, the electronic book is transmitted from the electronic book providing server 12 to the user terminal 14. This prevents the processing load of the control unit of the user terminal 14 from increasing and the processing required for the viewing of the file for pre-purchase viewing from being delayed because the electronic book is transmitted from the electronic book providing server 12 to the user terminal 14 during the viewing of the file for pre-purchase viewing.

Further, in this embodiment, when the value indicating the size of the unused capacity of the storage area of the user terminal 14 exceeds the predetermined value, the electronic book is transmitted from the electronic book providing server 12 to the user terminal 14, which allows the unused capacity of the storage area of the user terminal 14 to be reserved.

### [Third embodiment]

Now, a third embodiment of the present invention is described in detail with reference to the accompanying drawings.

An overall configuration diagram of the electronic book providing system 10 according to the third embodiment of the present invention is the same as that illustrated in FIG. 1. The electronic book providing system 10 according to the third embodiment includes the electronic book providing server 12 and the user terminals 14 (14-1, 14-2,..., 14-n), which are the same as those of the first embodiment and are each formed mainly of a computer. The electronic book providing server 12 and the user terminals 14 are connected to the computer network 16 such as the Internet, to be able to communicate with each other.

In this embodiment, in the same manner as in the first embodiment, the storage unit of the electronic book providing server 12 stores in advance a plurality of electronic books, the electronic book management data 20 exemplified in FIG. 2, the account data 22 exemplified in FIG. 3, and the like.

Also in this embodiment, when the user terminal 14 accesses the electronic book providing server 12 via the Web browser, inputs the user ID and the password, and then accesses a predetermined URL, a page corresponding to the predetermined URL is displayed on the display of the user terminal 14. Note that, after the user ID and the password are input, the electronic book providing server 12 can identify the user ID of the user who uses the user terminal 14 by referring to, for example, the session information.

In the electronic book providing system 10 according to this embodiment, the user is allowed to present an electronic book to another user as a gift. The following description is directed to a scene in which a first user who is the user of a first user terminal 14-1 presents an electronic book to a second user who is the user of a seconduser terminal 14-2 as a gift. Note that, in this embodiment, a transmission destination of the gift is the second user terminal 14-2, and a user who purchases the gift is the first user. Further, it is assumed that the user ID of the user of the first user terminal 14-1 has a value of 001. Further, it is assumed that the user ID of the user of the second user terminal 14-2 has a value of 002.

In this embodiment, by using a service provided by the electronic book providing server 12, the user can designate a user to be presented with a gift and an electronic book to be a candidate for the gift. The electronic book to be the candidate for the gift is hereinafter referred to as "gift candidate". Note that, the user may be able to individually designate gift candidates one by one. Further, the user can designate a catalog set in advance by a service provider or the like that runs the service provided by the electronic book providing server 12, and the electronic book group corresponding to the designated catalog may be determined as the gift candidate.

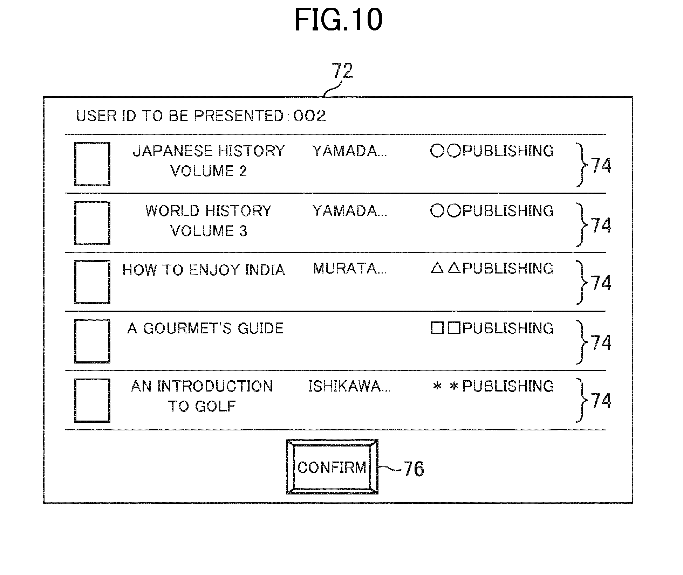

FIG. 10 is a diagram illustrating an example of a gift candidate list page 72 displayed on the display of the first user terminal 14-1 after the user to be presented with the gift and the gift candidate are designated. The gift candidate list page 72 exemplified in FIG. 10 shows the user ID of the user to be presented with the gift and data indicating a thumbnail image of a gift candidate, the title of the gift candidate, the name of the author of the gift candidate, and the like that are representative of each of five gift candidates. The above-mentioned data is hereinafter referred to as "gift candidate representative data 74". Further, the gift candidate list page 72 exemplified in FIG. 10 includes a gift confirmation button 76.

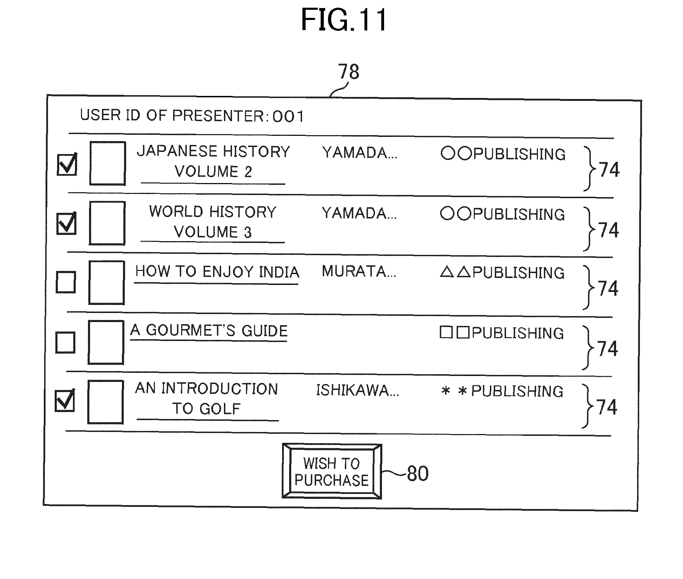

Here, for example, when the first user clicks the gift confirmation button 76 included in the gift candidate list page 72, information including designation of the user to be presented with the gift and the gift candidate is transmitted to the electronic book providing server 12. When the above-mentioned transmission is confirmed by a query periodically made to the electronic book providing server 12 by the second user terminal 14-2, information on a selection page 78 is provided from the electronic book providing server 12 to the second user terminal 14-2. Then, the selection page 78 exemplified in FIG. 11 is displayed on the display of the second user terminal 14-2. The selection page 78 shows the user ID of the user to be a presenter and a list of the gift candidate representative data 74. In this embodiment, the gift candidate representative data 74 is set as a link to the electronic book information page 24 for the gift candidate corresponding thereto. Further, the selection page 78 includes a purchase wish button 80. Here, the user of the second user terminal 14-2 clicks the purchase wish button 80 after selecting at least one electronic book wished to be purchased by checking a checkbox located on a left side of the gift candidate representative data 74 respectively corresponding to at least one gift candidate wished to be purchased on the selection page 78. Then, the payment for the selected electronic book is performed by agreement of the user of the first user terminal 14-1, which allows the electronic book to be viewed on the display of the second user terminal 14-2. Note that, in the example of FIG. 11, three electronic books are selected.

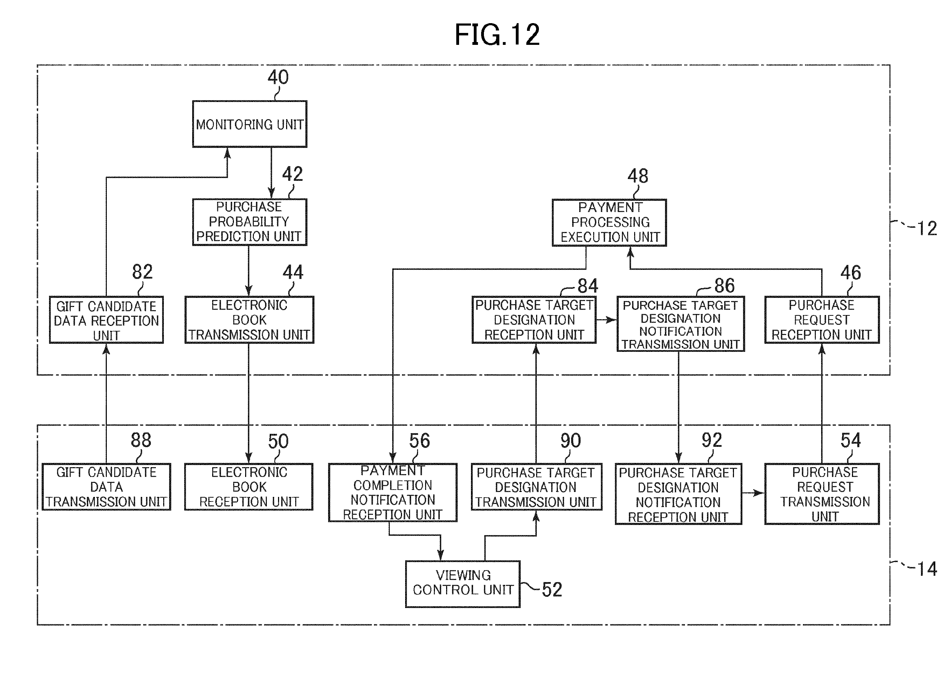

FIG. 12 is a functional block diagram illustrating an example of functions implemented by the electronic book providing system 10 according to this embodiment. Note that, in the electronic book providing system 10 according to this embodiment, functions other than the functions illustrated in FIG. 12 are also implemented.

The electronic book providing server 12 according to this embodiment functionally includes a monitoring unit 40, a purchase probability prediction unit 42, an electronic book transmission unit 44, a purchase request reception unit 46, a payment processing execution unit 48, a gift candidate data reception unit 82, a purchase target designation reception unit 84, and a purchase target designation notification transmission unit 86. Those components are implemented by executing the programs installed in the electronic book providing server 12, which is a computer, by the control unit of the electronic book providing server 12. Note that, the programs are supplied to the electronic book providing server 12 via, for example, a computer-readable recording medium such as a CD-ROM and a DVD-ROM, or via a communication network such as the Internet. Note that, the prediction means of the electronic book providing server disclosed in Claims corresponds to the purchase probability prediction unit 42 according to this embodiment. Further, the transmission means of the electronic book providing server disclosed in Claims corresponds to the electronic book transmission unit 44 according to this embodiment. Further, designation reception means of the electronic book providing server disclosed in Claims corresponds to the gift candidate data reception unit 82 according to this embodiment. Further, display control means of the electronic book providing server disclosed in Claims corresponds to the electronic book transmission unit 44 according to this embodiment. Further, the "means for controlling the file of the electronic book the information corresponding to which has not been selected to be deleted" of the electronic book providing server disclosed in Claims corresponds to the payment processing execution unit 48 according to this embodiment. Further, the payment processing execution means of the electronic book providing server disclosed in Claims corresponds to the payment processing execution unit 48 according to this embodiment.

The user terminal 14 according to this embodiment functionally includes an electronic book reception unit 50, a viewing control unit 52, a purchase request transmission unit 54, a payment completion notification reception unit 56, a gift candidate data transmission unit 88, a purchase target designation transmission unit 90, and a purchase target designation notification reception unit 92. Those components are implemented by executing the programs installed in the user terminal 14, which is a computer, by the control unit of the user terminal 14. Note that, the programs are supplied to the user terminal 14 via, for example, a computer-readable recording medium such as a CD-ROM and a DVD-ROM, or via a communication network such as the Internet. Note that, the reception means of the information processing terminal disclosed in Claims corresponds to the electronic book reception unit 50 according to this embodiment. Further, the display means of the information processing terminal disclosed in Claims corresponds to the display of the user terminal 14 according to this embodiment. Further, the control means of the information processing terminal disclosed in Claims corresponds to the viewing control unit 52 according to this embodiment.

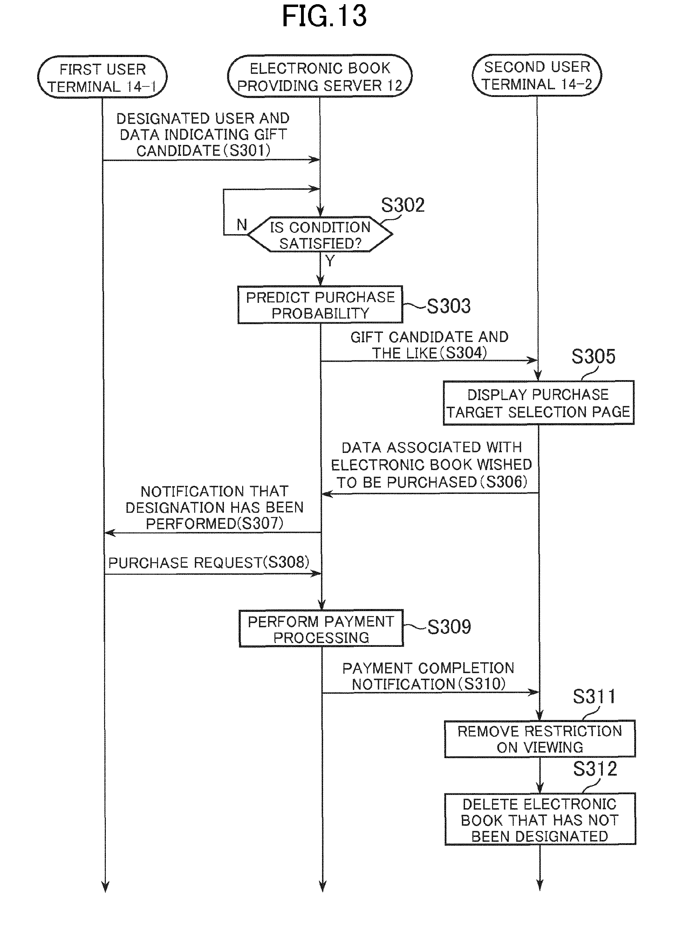

Here, an example of a flow of processing performed by the electronic book providing system 10 according to this embodiment in a scene in which the electronic book is presented as a gift from the first user to the second user is described with reference to a flowchart illustrated in FIG. 13.

First, when the first user clicks the gift confirmation button 76 included in the gift candidate list page 72 exemplified in FIG. 10, the gift candidate data transmission unit 88 of the first user terminal 14-1 transmits data indicating the designated user and the designated gift candidate to the electronic book providing server 12. Here, for example, the gift candidate data transmission unit 88 of the first user terminal 14-1 transmits data indicating the second user and the five gift candidates illustrated in FIG. 10 to the electronic book providing server 12. Then, the gift candidate data reception unit 82 of the electronic book providing server 12 receives the data (S301). Here, the electronic book providing server 12 can identify based on the account data 22 that the user terminal 14 used by the second user is the second user terminal 14-2. Then, the monitoring unit 40 of the electronic book providing server 12 continues monitoring the monitoring target until the predetermined condition relating to the traffic amount between the electronic book providing server 12 and the second user terminal 14-2, the load on the second user terminal 14-2, the usage amount of the resource of the second user terminal 14-2, and the like is satisfied (S302) . The load represents, for example, a CPU usage rate of the second user terminal 14-2. Further, the usage amount of the resource represents, for example, the usage amount of the storage unit of the second user terminal 14-2. In this embodiment, in the second user terminal 14-2, a size of an area reserved for storing the electronic book is defined in advance. The area is hereinafter referred to as "storage area". Then, in this processing example, the monitoring unit 40 monitors the unused capacity of the storage area of the second user terminal 14-2 and the load on the second user terminal 14-2. Here, the monitoring unit 40 monitors, for example, the CPU usage rate of the second user terminal 14-2.

When the monitoring unit 40 of the electronic book providing server 12 detects that the predetermined condition is satisfied (S302: Y), the purchase probability prediction unit 42 executes the prediction of the probability that the electronic book stored in the electronic book providing server 12 is purchased by the first user (S303). In this processing example, for example, the monitoring unit 40 detects that the condition that the value indicating the size of the unused capacity of the storage area of the second user terminal 14-2 exceeds the predetermined value and that the CPU usage rate of the second user terminal 14-2 is smaller than the predetermined value is satisfied, the purchase probability prediction unit 42 executes the prediction of the probability that the electronic book is purchased. In this processing example, the purchase probability prediction unit 42 predicts the gift candidate indicated by the data received in the processing of S301 as the electronic book to be purchased by the first user with high probability. Further, in this processing example, the purchase probability prediction unit 42 predicts the user terminal 14 of the user indicated by the data received in the processing of S301 as the user terminal 14 used to view the electronic book when the electronic book predicted to be purchased with high probability is purchased. Here, for example, the purchase probability prediction unit 42 predicts the second user terminal 14-2 serving as the user terminal 14 of the second user as the user terminal 14 used to view the electronic book when the electronic book predicted to be purchased with high probability is purchased.

Then, the electronic book transmission unit 44 transmits the at least one electronic book predicted to be purchased by the first user in the processing of S303 and the selection page 78 exemplified in FIG. 11, which is generated based on the gift candidate representative data 74 regarding the electronic book, to the second user terminal 14-2. In this embodiment, the electronic book transmission unit 44 transmits the gift candidate and the selection page 78 generated based on the gift candidate representative data 74 regarding the gift candidate, to the second user terminal 14-2. Then, the electronic book reception unit 50 of the second user terminal 14-2 receives the gift candidate and the selection page 78 (S304). The gift candidate and the selection page 78 received by the second user terminal 14-2 are saved to the storage unit of the second user terminal 14-2. In this stage, in the same manner as in the first embodiment, the gift candidate saved to the storage unit is in the state in which only a part designated by the user can be viewed.

Then, the viewing control unit 52 of the second user terminal 14-2 displays the received selection page 78 on the display of the second user terminal 14-2 (S305).

Here, when the second user clicks the gift candidate representative data 74 set in the selection page 78 as the link, the electronic book information page 24 exemplified in FIG. 4, which corresponds to the clicked gift candidate representative data 74, is displayed on the display of the second user terminal 14-2. Here, it is assumed that, when the pre-purchase viewing part selection button 28 included in the electronic book information page 24 is clicked, the viewing control unit 52 of the second user terminal 14-2 receives the input of the pre-purchase viewing request. Then, the viewing control unit 52 of the second user terminal 14-2 displays a part of the contents of the gift candidate corresponding to the electronic book information page 24, which falls within the range of the first predetermined number of pages of the chapter corresponding to the clicked pre-purchase viewing part selection button 28, on the display of the second user terminal 14-2. The processing for the displaying is the same processing as the processing of S104 and S105 according to the first embodiment. In this manner, the second user can view a part of the contents of the gift candidate.

After the processing of S305 is executed, the second user clicks the purchase wish button 80 after selecting the electronic book wished to be purchased on the selection page 78. Then, the purchase target designation transmission unit 90 of the second user terminal 14-2 transmits data associated with the at least one electronic book designated as the electronic book wished to be purchased, to the electronic book providing server 12. Here, for example, the purchase target designation transmission unit 90 of the second user terminal 14-2 transmits the electronic book ID of at least one electronic book designated as the electronic book wished to be purchased, to the electronic book providing server 12. Then, the purchase target designation reception unit 84 of the electronic book providing server 12 receives the data (S306).

Then, the purchase target designation notification transmission unit 86 of the electronic book providing server 12 transmits, to the first user terminal 14-1, the fact that the electronic book associated with the data indicated in S306 has been designated as the electronic book wished to be purchased. Then, the purchase target designation notification reception unit 92 of the first user terminal 14-1 receives the fact of the designation (S307). Then, a page (not shown) including an agree button for agreeing to the purchase of the electronic book for the user of the second user terminal 14-2 is displayed on the display of the first user terminal 14-1.

Here, when the user of the first user terminal 14-1 clicks the agree button, the purchase request transmission unit 54 of the first user terminal 14-1 transmits the purchase request for the electronic book to the electronic book providing server 12. Then, the purchase request reception unit 46 of the electronic book providing server 12 receives the purchase request (S308). Then, the payment processing execution unit 48 of the electronic book providing server 12 executes the payment processing for the at least one electronic book (S309). In this embodiment, the first user is billed by the execution of the payment processing.

When the payment processing is completed, the payment processing execution unit 48 of the electronic book providing server 12 transmits a notification indicating that the payment processing has been completed to the second user terminal 14-2. Then, the payment completion notification reception unit 56 of the second user terminal 14-2 receives the notification (S310). Then, the viewing control unit 52 of the second user terminal 14-2 removes the restriction on the viewing of the electronic book for which the payment processing has been completed (S311). Here, for example, the viewing control unit 52 of the second user terminal 14-2 controls the electronic book so that a part thereof whose viewing has been restricted can be viewed. Then, the electronic book deletion unit 70 of the second user terminal 14-2 deletes the electronic book that has not been designated as the electronic book wished to be purchased among the electronic books designated as the gift candidates, from the storage unit of the second user terminal 14-2 (S312).

In this manner, in regard to the electronic book designated as the electronic book wished to be purchased by the user of the second user terminal 14-2, all the contents of the electronic book can be viewed on the user terminal 14 after the payment processing for the electronic book is completed.

Further, in this embodiment, the payment processing execution unit 48 of the electronic book providing server 12 transmits the notification indicating that the payment processing for the electronic book designated as the electronic book wished to be purchased by the user of the second user terminal 14-2 has been completed, to the second user terminal 14-2. This causes the payment processing execution unit 48 of the electronic book providing server 12 to control the electronic book that has not been designated as the electronic book wished to be purchased by the user of the second user terminal 14-2 to be deleted from the storage unit of the second user terminal 14-2. As a result, the unused capacity of the storage unit of the second user terminal 14-2 increases.

It is conceivable to use such various methods as described above in the first embodiment for restricting the viewing of a part or an entirety of the electronic book and controlling the electronic book to change from the state in which the viewing is not allowed to the state in which the viewing is allowed.

Further, in the third embodiment, the first user may be allowed to set an upper limit to the number of electronic books that can be purchased by the second user on the gift candidate list page 72. Then, the second user may be allowed to select the gift candidate wished to be purchased within the range of the upper limit on the gift candidate list page 72. Then, the electronic book deletion unit 70 of the second user terminal 14-2 may delete the electronic book of the gift candidate that is not allowed to be viewed when the number of electronic books allowed to be viewed by the second user reaches the above-mentioned upper limit, from the storage unit of the second user terminal 14-2. For example, the electronic book deletion unit 70 of the second user terminal 14-2 may delete the electronic book of the gift candidate that is not allowed to be viewed when the number of electronic books for which the payment processing has been executed reaches the above-mentioned upper limit, from the storage unit of the second user terminal 14-2.

Further, the first user may set a period that allows the second user to purchase the electronic book on the gift candidate list page 72. Then, the second user may be allowed to select the gift candidate wished to be purchased on the gift candidate list page 72 during the above-mentionedperiod that allows the purchase. Then, the electronic book deletion unit 70 of the second user terminal 14-2 may delete the electronic book of the gift candidate that is not allowed to be viewed after the above-mentioned period that allows the purchase has elapsed, from the storage unit of the second user terminal 14-2.

Further, in the processing of S304, an electronic mail in which the gift candidate representative data 74 is laid out as a list may be transmitted to the electronic mail address of the user of the second user terminal 14-2. Note that, here, for example, after the electronic book of the gift candidate is transmitted to the second user terminal 14-2, the electronic mail in which the gift candidate representative data 74 is laid out as a list may be transmitted to the electronic mail address of the user of the second user terminal 14-2. After that, when the second user terminal 14-2 accesses the electronic book providing server 12, the selection page 78 may be transmitted from the electronic book providing server 12 to the second user terminal 14-2. Then, the selection page 78 may be displayed on the display of the second user terminal 14-2.

Further, in the processing example described above, the user to be presented is designated by the user ID, but the user to be presented may be designated by the electronic mail address of the user. Further, in the processing of S304, an electronic mail including a link to the selection page 78 may be transmitted to the electronic mail address of the user of the second user terminal 14-2. The selection page 78 may be displayed on the display of the second user terminal 14-2, when the second user clicks the link.

Further, the above-mentioned electronic mail or the selection page 78 may be transmitted to a terminal different from the user terminal 14 to which the electronic book of the gift candidate is to be transmitted. Further, the electronic book providing server 12 may receive the designation of the electronic book wished to be purchased from the second user terminal 14-2 along with a selection of the user terminal 14 to which the electronic book is transmitted. Then, the electronic book providing server 12 may allow the electronic book for which the payment processing has been completed to be viewed on the selected user terminal 14.

Further, the electronic book providing system 10 may control the electronic book wished to be purchased by the second user to be allowed to be viewed before the payment processing for the electronic book is completed.

Further, the electronic book providing server 12 may execute the payment processing for the gift candidate before the purchase request for the electronic book is received. Then, the electronic book providing server 12 may execute processing for canceling the payment for the gift candidate that has not been selected by the second user.

In this embodiment, the file of the electronic book which is a gift candidate and for which a transmission request has not been received is transmitted from the electronic book providing server 12 to the second user terminal 14-2 before the purchase. Here, the file of the electronic book which is a gift candidate and for which a transmission request has not been received is transmitted from the electronic book providing server 12 to the second user terminal 14-2 before the payment processing is executed. However, at this point in time, the second user's viewing of the contents of the transmitted electronic book is restricted except for a part that can be viewed by clicking the pre-purchase viewing part selection button 28. Then, in this embodiment, after the purchase, the second user is allowed to view all the contents of the electronic book. Here, after the payment processing is executed, the second user is allowed to view all the contents of the electronic book. However, after the purchase, the electronic book whose viewing is to be allowed is not transmitted from the electronic book providing server 12 to the second user terminal 14-2. Here, after the payment processing is executed, the electronic book whose viewing is to be allowed is not transmitted from the electronic book providing server 12 to the second user terminal 14-2. In this manner, in this embodiment, when the user desires to view the electronic book, the electronic book can be viewed by the user earlier than in the related art. Note that, in this embodiment, the above-mentioned wording "after the purchase" is not limited to the wording "after the payment processing is executed". For example, the second user may be allowed to view all the contents of the electronic book even before the payment processing is executed after the electronic book providing server 12 receives the purchase request for the electronic book from the user terminal 14.

Further, in this embodiment, when the CPU usage rate of the second user terminal 14-2 is smaller than the predetermined value, the electronic book is transmitted from the electronic book providing server 12 to the user terminal 14. Therefore, it is possible to prevent a CPU load on the second user terminal 14-2 from being tightened by transmitting the electronic book from the electronic book providing server 12 to the user terminal 14.

Further, in this embodiment, when the value indicating the size of the unused capacity of the storage area of the user terminal 14 exceeds the predetermined value, the electronic book is transmitted from the electronic book providing server 12 to the user terminal 14, which allows the unused capacity of the storage area of the user terminal 14 to be reserved.

Note that, the present invention is not limited to the embodiments described above.

For example, when the purchase button 26 included in the electronic book information page 24 corresponding to the electronic book wished to be purchased is clicked in a state in which the communications between the electronic book providing server 12 and the user terminal 14 cannot be performed, the user terminal 14 may remove the restriction on the viewing of the electronic book. That is, for example, in the above-mentioned case, the user terminal 14 may be controlled to be a state in which the entirety of the electronic book can be viewed. When the communications between the electronic book providing server 12 and the user terminal 14 are enabled after that, the purchase request transmission unit 54 of the user terminal 14 may transmit the purchase request for the electronic book to the electronic book providing server 12. Then, the payment processing execution unit 48 of the electronic book providing server 12 may execute the payment processing for the electronic book. In this case, even before the payment processing is executed, the entirety of the electronic book can be viewed after the purchase of the electronic book. Here, the entirety of the electronic book can be viewed after, for example, the purchase button 26 is clicked.

Here, for example, the user terminal 14 may receive in advance an input of information necessary for the payment such as credit card information, and the user terminal 14 may transmit the information necessary for the payment to the electronic book providing server 12 along with the purchase request. Further, information indicating a charged amount, which is paid in advance by the user to the service provider that runs the electronic book providing server 12, may be managed on the electronic book providing server 12. In regard to the purchase of the electronic book within a range of the charged amount, the user terminal 14 may remove the restriction on the viewing of the electronic book when the purchase button 26 is clicked. Then, the electronic book providing server 12 may receive the information indicating the payment amount from the user terminal 14 along with the purchase request, and may reduce the payment amount from the charged amount managed on the electronic book providing server 12.

In the above-mentioned manner, when the user clicks the purchase button 26, even in the state in which the communications between the electronic book providing server 12 and the user terminal 14 cannot be performed, that is, even in an off-line state, the user can view the electronic book.

Further, the roles separately played by the electronic book providing server 12 and the user terminal 14 are not limited to those of the above-mentioned embodiments. Moreover, the specific numerical values and character strings in the specification, and specific numerical values and character strings in the accompanying drawings are exemplary, and the present invention is not limited to those numerical values and character strings.

## Claims

1. An electronic book providing server, comprising:
prediction means for predicting an electronic book to be purchased with high probability, and predicting an information processing terminal to be used to view the electronic book when the electronic book is purchased; and
transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

2. The electronic book providing server according to claim 1, wherein:
the transmission means transmits, when a transmission request for a file for viewing having a smaller size than a size of the file of the electronic book that allows a part of the contents of the electronic book to be viewed is received from the information processing terminal, the file for viewing to the information processing terminal in response to the transmission request;
the prediction means predicts the electronic book the part of the contents of which is allowed to be viewed by the file for viewing, as the electronic book to be purchased with high probability; and
the transmission means transmits the file of the electronic book which is predicted to be purchased with high probability to the information processing terminal in the state after the file for viewing is transmitted to the information processing terminal.

3. The electronic book providing server according to claim 2, wherein the transmission means starts transmitting the file of the electronic book which is predicted to be purchased with high probability to the information processing terminal after displaying of the file for viewing has been finished on the information processing terminal.

4. The electronic book providing server according to any one of claims 1 to 3, wherein the prediction means predicts an electronic book that is another volume of an electronic book registered in a usage history of the electronic book providing server by a user of the information processing terminal or an electronic book written by the same author as an author of the electronic book registered in the usage history, as the electronic book to be purchased with high probability.

5. The electronic book providing server according to any one of claims 1 to 4, further comprising designation reception means for receiving, from the information processing terminal of a user to be a presenter of a gift, designation of an electronic book to be a candidate for the gift and a user to be presented with the gift,
wherein the prediction means predicts the electronic book designated as the candidate for the gift as the electronic book to be purchased with high probability, and predicts the information processing terminal of the user designated to be presented with the gift as the information processing terminal to be used to view the electronic book when the electronic book is purchased.

6. The electronic book providing server according to claim 5, further comprising display control means for controlling information corresponding to the electronic book designated as the candidate for the gift to be displayed on the information processing terminal of the user to be presented with the gift, wherein:
in accordance with how the displayed information is selected, the contents of the electronic book corresponding to the selected information are allowed to be viewed on the information processing terminal of the user to be presented with the gift; and
the electronic book providing server further comprising:
means for controlling the file of the electronic book the information corresponding to which has not been selected to be deleted among the files of the electronic books transmitted to the information processing terminal of the user designated to be presented with the gift.

7. The electronic book providing server according to any one of claims 1 to 6, wherein the transmission means transmits the file of the electronic book to the information processing terminal in a state in which viewing of contents other than a part designated by a user of the information processing terminal or a part identified based on a part quoted by another user is restricted before the purchase.

8. The electronic book providing server according to any one of claims 1 to 7, wherein the transmission means transmits the file of the electronic book which is predicted to be purchased with high probability to the information processing terminal when a traffic amount of communications between the electronic book providing server and the information processing terminal of a transmission destination is smaller than a predetermined amount or when a value indicating a size of load on the information processing terminal of the transmission destination is smaller than a predetermined value.

9. The electronic book providing server according to any one of claims 1 to 8, wherein the transmission means determines whether or not to transmit the file of the electronic book based on an unused capacity of a storage unit provided to the information processing terminal.

10. The electronic book providing server according to any one of claims 1 to 9, further comprising:
means for determining whether or not to delete a file of an electronic book for which a purchase request has not been received among files of electronic books transmitted to the information processing terminal based on an unused capacity of a storage unit provided to the information processing terminal.

11. The electronic book providing server according to any one of claims 1 to 10, wherein:
when the information processing terminal receives an input of a fact that the electronic book the viewing of the at least a part of the contents of which is restricted is to be purchased in a state in which it is impossible to perform communications between the electronic book providing server and the information processing terminal, the at least a part of the electronic book is controlled to be allowed to be viewed and
the electronic book providing server further comprising:
payment processing execution means for receiving a purchase request for the electronic book from the information processing terminal when the communications between the electronic book providing server and the information processing terminal are enabled after the information processing terminal receives the input of the fact of being to be purchased, and executing payment processing in response to the purchase request.

12. An information processing terminal, comprising:
reception means for receiving a file of an electronic book from an electronic book providing server for transmitting the file of the electronic book which is predicted to be purchased with high probability and for which a transmission request has not been received in a state in which viewing of at least a part of contents of the electronic book is restricted before the electronic book is purchased and in which the at least a part is allowed to be viewed after the electronic book is purchased;
control means for controlling the electronic book so that the at least one part thereof whose viewing has been restricted is allowed to be viewed after the electronic book is purchased; and
display means for displaying the contents of the electronic book being allowed to be viewed.

13. An electronic book providing system, comprising:
an electronic book providing server; and
an information processing terminal,
the electronic book providing server comprising:
prediction means for predicting an electronic book to be purchased with high probability, and predicting the information processing terminal to be used to view the electronic book when the electronic book is purchased; and
transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased,
the information processing terminal comprising:
reception means for receiving the file of the electronic book transmitted from the electronic book providing server;
control means for controlling the electronic book so that the at least a part thereof whose viewing has been restricted is allowed to be viewed after the electronic book is purchased; and
display means for displaying the contents of the electronic book being allowed to be viewed.

14. An electronic book transmission method, comprising:
a prediction step of predicting an electronic book to be purchased with high probability, and predicting an information processing terminal to be used to view the electronic book when the electronic book is purchased; and
a transmission step of transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

15. A program for causing a computer to function as:
prediction means for predicting an electronic book to be purchased with high probability, and predicting an information processing terminal to be used to view the electronic book when the electronic book is purchased; and
transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.

16. A recording medium having recorded thereon a program for causing a computer to function as:
prediction means for predicting an electronic book to be purchased with high probability, and predicting an information processing terminal to be used to view the electronic book when the electronic book is purchased; and
transmission means for transmitting a file of the electronic book which is predicted to be purchased with high probability and for which a transmission request has not been received, to the information processing terminal, in a state in which viewing of at least a part of contents of the electronic book is restricted before the electronic book is purchased and in which the at least a part is allowed to be viewed after the electronic book is purchased.
